# EUROPÄISCHE PATENTSCHRIFT

(11) **EP 3 915 714 B1**
(45) Veröffentlichungstag und Bekanntmachung des Hinweises auf die Patenterteilung: **10.05.2023**
(21) Anmeldenummer: 21163089.2
(22) Anmeldetag: 17.03.2021
(51) Int. Cl.: B23K 26/03, B23K 26/21, B23K 31/12

(54) **ÜBERWACHUNGSEINRICHTUNG FÜR EINE LASERSTRAHLSCHWEISSANLAGE, LASERSTRAHLSCHWEISSANLAGE UND VERFAHREN ZUR ÜBERWACHUNG**
MONITORING DEVICE FOR A LASER WELDING MACHINE, LASER WELDING MACHINE AND METHOD OF MONITORING
DISPOSITIF DE SURVEILLANCE POUR UNE INSTALLATION DE SOUDAGE PAR FAISCEAU LASER, INSTALLATION DE SOUDAGE PAR FAISCEAU LASER ET PROCÉDÉ DE SURVEILLANCE

(30) Priorität: 05.05.2020 DE 102020205638
(43) Veröffentlichungstag der Anmeldung: 01.12.2021
(73) Patentinhaber: Robert Bosch GmbH, 70442 Stuttgart (DE)
(72) Erfinder: Boley, Meiko, 71229 Leonberg (DE)

(56) Entgegenhaltungen:
- CN-A- 103 506 756
- CN-A- 110 355 465
- US-A- 5 961 859
- US-A- 6 060 685

## Beschreibung

### Stand der Technik

Die Erfindung betrifft eine Überwachungseinrichtung für eine Laserstrahlschweißanlage, wobei die Laserstrahlschweißanlage ausgebildet ist, zwei Fügepartner in einem Fügebereich zu fügen, wobei die Überwachungseinrichtung zur Überwachung der Laserstrahlschweißanlage ausgebildet ist. Die Erfindung betrifft auch eine Laserstrahlschweißanlage zur Fügen mindesten zweier Fügepartner, mit einer solchen Überwachungseinrichtung, und ein Verfahren zur Überwachung einer Laserstrahlschweißanlage.

Im Bereich des Laserstrahlschweißens stellen Verschmutzungen auf den Fügepartnern eine große Herausforderung dar. Beispielsweise können Reste einer Isolationsschicht zwischen zwei zu verbindenden Stromleitern zu Auswürfen der Schmelze aus der Prozesszone (Fügbereich) führen, welche wiederum zu einer Reduktion des strom- und kraftragenden Querschnitts führen.

Ein Verfahren zur automatischen Beurteilung von Laserbearbeitungsprozessen ist aus der Druckschrift DE 101 03 255 A1 bekannt. Dabei werden die Prozesse mit einer Kamera mit hohem Dynamikbereich hinsichtlich Strahlungsdichte und Aufnahmegeschwindigkeit aufgezeichnet und auf der Grundlage von Referenzdaten weiterverarbeitet. In einem weiteren Schritt können aufgenommene Prozessdaten mit den Referenzdaten verglichen werden und der Prozess so beurteilt werden.

Aus der US 6,060,685 (offenbarend alle Merkmale und/ oder Schritte des Oberbegriffs der Ansprüche 1, 10 und 13) ist ein Verfahren zur Überwachung der Qualität eines Laserprozesses, beispielsweise eines Laserschweißverfahren, bekannt. Das Verfahren umfasst die Überwachung des Lichts, das vom Schweißplasma über der Oberfläche des Werkstücks abgestrahlt wird.

Die CN 110355465 A betrifft ein System zum Laserschweißen basierend auf einer industriellen Kamera, insbesondere für ein Unterwasserreparaturverfahren.

### Offenbarung der Erfindung

Im Rahmen der Erfindung wird eine Überwachungseinrichtung mit den Merkmalen des Anspruchs 1 vorgeschlagen. Ferner wird eine Laserstrahlschweißanlage mit den Merkmalen des Anspruchs 10 und ein Verfahren zur Überwachung einer Laserstrahlschweißanlage mit den Merkmalen des Anspruchs 13 vorgeschlagen. Weitere Vorteile, Wirkungen und Ausgestaltungen ergeben sich aus den Unteransprüchen, der Beschreibung und den beigefügten Figuren.

Der Erfindung liegt die Aufgabe zu Grunde, eine Überwachungseinrichtung für eine Laserstrahlschweißanlage bereitzustellen, welche einen wirtschaftlich effizienten Einsatz der Laserstrahlschweißanlage ermöglicht, insbesondere mit verbesserter Qualitätssicherung des Fügeprozesses. Ferner ist es Aufgabe der Erfindung, eine geregelte Prozessführung des Fügeverfahrens basierend auf einer Sensorüberwachung des Fügeverfahrens zur ermöglichen. Insbesondere ermöglicht die Überwachungseinrichtung eine kostengünstige Sensorüberwachung mit hoher zeitlicher Auflösung und reduzierter Datenmenge, im Speziellen reduzierter Bilddatenmenge. Zum Beispiel ist durch eine reduzierte Datenmenge auch eine Sensorüberwachung und Datenspeicherung möglich.

Es wird eine Überwachungseinrichtung für eine Laserstrahlschweißanlage vorgeschlagen. Die Überwachungseinrichtung ist insbesondere integrierbar, integriert und/oder nachrüstbar in die Laserstrahlschweißanlage. Die Überwachungseinrichtung ist zur Überwachung der Laserstrahlschweißanlage, eines Fügeverfahrens und/oder Fügeprozesses der Laserstrahlschweißanlage ausgebildet. Beispielsweise ist die Überwachungseinrichtung ausgebildet, eine Überwachung zur Qualitätssicherung und/oder eine Regelung des Fügeprozesses durchzuführen und/oder zu unterstützen.

Die Laserstrahlschweißanlage ist ausgebildet mindestens zwei Fügepartner in einem Fügebereich zu fügen, insbesondere stoffschlüssig zu fügen. Das Fügen ist insbesondere als ein Schweißen ausgebildet. Vorzugsweise weist die Laserstrahlschweißanlage einen Anlagenraum auf, wobei das Fügen und/oder Schweißen im Anlagenraum erfolgt. Insbesondere Der Fügebereich ist insbesondere als Schweißbereich, im Speziellen als Schweißnaht, ausgebildet. Im Speziellen kann die Laserstrahlschweißanlage zum Fügen von mehr als zwei Fügepartner ausgebildet sein. Die Fügepartner sind vorzugsweise metallisch und/oder als elektrische Leiter ausgebildet. Die Laserstrahlschweißanlage weist zum Fügen, insbesondere zum Laserstrahlschweißen, eine Strahlungsquelle auf, wobei die Strahlungsquelle beispielsweise Teil einer Lasermaterialbearbeitungseinrichtung. Die Strahlungsquelle ausgebildet ist, einen energiereichen Strahl auszugeben, wobei mittels des energiereichen Strahls mindestens einer der Fügepartner im Fügebereich erwärmt und/oder aufgeschmolzen wird. Die Strahlungsquelle ist insbesondere eine Laserstrahlquelle, alternativ ist die Strahlungsquelle eine Elektronenstrahlquelle, wobei die Laserstrahlschweißanlage hierbei insbesondere zum Elektronenstrahlschweißen ausgebildet ist.

Die Überwachungseinrichtung weist einen Dynamic-Vision-Sensor auf. Der Dynamic-Vision-Sensor wird insbesondere auch bezeichnet als Eventkamera, neuromorphische Kamera und/oder silicon retina. Der Dynamic-Vision-Sensor weist eine Mehrzahl an Pixeln auf und ist im Speziellen ausgebildet, für die einzelnen Pixel unabhängig und/oder asynchron von den anderen Pixeln eine Helligkeitsänderung im jeweiligen Pixel zu detektieren und/oder auszugeben, wobei Pixel für die keine Helligkeitsänderung feststellbar ist stumm bleiben und/oder kein Signal ausgeben. Es ist eine Überlegung des Dynamic-Vision-Sensors für Pixel unabhängig ein auf Helligkeitsänderung basierendes Ausgabesignal und/oder Reaktion auszugeben, sodass insbesondere nur Veränderungen detektiert und ausgegeben werden, wobei für eine statische Szenen oder Pixel ohne Helligkeitsänderung diese stumm bleiben ohne ein Ausgabesignal auszugeben. Insbesondere ist der Dynamic-Vision-Sensor ausgebildet, eine Helligkeitsänderung ab einem vorgegebenen und/oder einstellbaren Schwellenwert als solche zu detektieren. Vorzugsweise ist der Dynamic-Vision-Sensor ausgebildet, zur Ausgabe eines Pixels Zusatzinformationen zu bestimmen und/oder anzugeben, beispielsweise eine Pixeladresse, einen Zeitstempel, eine Polarität und/oder ein Ansteige/Absteigeverhalten der Helligkeitsänderung. Der Dynamic-Vision-Sensor weist vorzugsweise eine Zeitauflösung besser als eine Mikrosekunde und/oder eine Dynamik besser als 120 dB auf.

Der Dynamic-Vision-Sensor ist angeordnet, mindestens einen Abschnitt des Fügebereichs sensortechnisch zu erfassen und/oder sensortechnisch abbilden zu können. Beispielsweise ist der Dynamic-Vision-Sensor angeordnet die Fügepartner sensortechnisch zu erfassen und/oder zu überwachen. Im Speziellen ist der Dynamic-Vision-Sensor im Anlagenraum angeordnet und/oder anordenbar. Der Dynamic-Vision-Sensor weist einen Erfassungsbereich auf. Der Dynamic-Vision-Sensor ist ausgebildet, Helligkeitsänderungen für Abschnitte die vom Erfassungsbereich erfassbar und/oder abbildbar sind zu detektieren. Mit anderen Worten ist der Dynamic-Vision-Sensor angeordnet und/oder für den Betrieb so anzuordnen, dass der Fügebereich und/oder die Fügepartner im Erfassungsbereich des Dynamic-Vision-Sensor liegen und Helligkeitsänderungen im Fügebereich detektiert werden. Insbesondere ist der Dynamic-Vision-Sensor angeordnet, einen Auftreffbereich des energiereichen Strahls auf dem Fügepartner zu erfassen. Beispielsweise weist die Überwachungsrichtung ein Ausrichtungsmodul auf, wobei das Ausrichtungsmodul ausgebildet ist, den Dynamic-Vision-Sensor so auszurichten und/oder nachzuführen, dass der Fügebereich im Erfassungsbereich liegen.

Der Dynamic-Vision-Sensor ist ausgebildet, eine lokale Helligkeitsänderung zu detektieren und als Ereignisdaten bereitzustellen. Insbesondere umfassen die Ereignisdaten Signale und/oder Informationen aus Pixeln für die eine Helligkeitsänderung detektiert wurde und/oder vorliegt, wobei die Ereignisdaten vorzugsweise keine Daten oder Informationen aus Pixeln umfassen die keine Helligkeitsänderung detektiert haben. Im Vergleich zu üblichen optischen Bildern und/oder Aufnahmen umfassen die Ereignisdaten damit im Speziellen nur Informationen Signale und/oder Daten aus Pixeln die Änderungen insbesondere Helligkeitsänderungen, detektiert haben und keine Informationen, Signale und/oder Daten aus Pixeln für die die Szene statisch bleibt, so dass die Ereignisdaten im Vergleich zu üblichen Bilddaten einer optischen Aufnahme datenreduziert sind. Vom Dynamic-Vision-Sensor detektierbare Helligkeitsänderungen basierend beispielsweise auf einer Änderung der Szene, beispielsweise eine Farbänderung, eine Kontraständerung oder Farbintensitätsänderung.

Die Überwachungseinrichtung weist ein Auswertemodul auf. Das Auswertemodul kann softwaretechnisch oder hardwaretechnisch ausgebildet sein. Insbesondere kann das Auswertemodul integriert oder Teil des Dynamic-Vision-Sensor sein. Dem Auswertemodul sind die Ereignisdaten bereitgestellt.

Das Auswertemodul ist ausgebildet, basierend auf den Ereignisdaten eine Überwachung des Fügeprozesses und/oder der Laserstrahlschweißanlage durchzuführen. Im Speziellen ist das Auswertemodul ausgebildet, basierend auf den Ereignisdaten eine Verdampfung und/oder einen Materialauswurf bei dem Fügeprozess festzustellen.

Das Auswertemodul ist ausgebildet, basierend auf den Ereignisdaten eine Ausbreitung der Helligkeitsänderungen zu bestimmen. Als Ausbreitung wird beispielsweise verstanden, ob eine detektierte Helligkeitsänderung sich vergrößert, verkleinert, formverändert und/oder positionsverändert. Die Ausbreitung wird insbesondere von einem Anfangszeitpunkt in die Zukunft bestimmt. Die Ausbreitung wird in mindestens eine Raumrichtung bestimmt. Der Analgenraum und/oder der Fügebereich lässt sich beispielsweise mittels eine kartesischen x-y-z-Koordinatensystems beschreiben, wobei x-, y- und z-Achse jeweils eine Raumrichtung bilden. Die Ausbreitung der Helligkeitsänderung wird beispielsweise in einem Raumrichtung-Zeit-Raum, z.B. x-t-Raum, bestimmt und/oder ausgewertet.

Das Auswertemodul ist ausgebildet, ein Vorliegen einer Verschmutzungsemission basierend auf der Ausbreitung der Helligkeitsänderung zu bestimmen und/oder zu bewerten. Beispielsweise ist das Auswertemodul ausgebildet, ein Vorliegen einer Ausbreitung als notwendige Voraussetzung für eine Feststellung der Verschmutzungsemission zu fordern. Im Speziellen ist das Auswertemodul ausgebildet als Voraussetzung zur Feststellung einer Verschmutzungsemission weitere Forderungen an die Ausbreitung und/oder an Eigenschaften der Ausbreitung zu stellen, beispielsweise an deren Geometrie, Form und/oder Ausbreitungsgeschwindigkeit. Feststellen einer Verschmutzungsemission ist im Speziellen gleichbedeutend zu Detektion einer Verschmutzungsemission und/oder zum Bewerten einer Ausbreitung als Verschmutzungsemission. Eine Verschmutzungsemission ist entsprechend der Erfindung ein Verdampfen und/oder Sublimieren einer Verschmutzung im Fügebereich und/oder auf den Fügepartner im Fügebereich. Eine Verschmutzung ist beispielsweise ein Lack oder ein Kunststoff, insbesondere als Rest, als Film und/oder als Schicht.

Der Erfindung liegt die Überlegung zugrunde, eine Überwachungseinrichtung bereitzustellen die eine Prozessüberwachung einer Laserstrahlschweißanlage ermöglicht, die datenreduziert den Fügebereich überwacht und Verschmutzungsemissionen festellen kann. Insbesondere zeichnet sich die Überwachungseinrichtung durch eine geringe Datenrate aus, was die Anforderungen an Speicher und Überwachungsbandbreite reduziert. Ferner ermöglicht die Überwachungseinrichtung ein hohes zeitliches Auflösungsvermögen. Insbesondere zeichnet sich die Überwachungsvorrichtung durch geringe Kosten und geringen Bauraum aus, im Speziellen im Vergleich zu konventionellen High-Speed-Kameras mit zeitlicher Auflösung im Mikrosekundenbereich.

Eine Ausgestaltung der Überwachungseinrichtung sieht vor, dass das Auswertemodul ausgebildet ist, für die Ausbreitung eine geometrische Form zu bestimmen und/oder festzustellen. Beispielsweis ist das Auswertemodul ausgebildet, die Ausbreitung auf das Vorliegen und/oder eine Ähnlichkeit zu einer geometrischen Form zu untersuchen. Als geometrische Form ist im Speziellen eine Dreiecks-, eine Trichter-, eine Keil- und/oder Kegelform zu verstehen. Beispielsweise ist das Auswertemodul ausgebildet, als Bedingung für das Bewerten einer detektierten Helligkeitsänderung als Verschmutzungsemission eine bestimmte geometrische Form der Ausbreitung zu verlangen.

Optional ist das Auswertemodul ausgebildet, als Bedingung für das Bewerten einer Helligkeitsänderung und/oder Ausbreitung als Verschmutzungsemission eine trichterförmige und/oder kegelförmige geometrische Form zu verlangen. Insbesondere eine Ausbreitung von einem Punkt und/oder einer Spitze, wobei Ausbreitung mit der Zeit in mindestens eine Raumrichtung divergiert und/oder sich ausweitet. Dieser Ausgestaltung liegt die Überlegung zu Grunde, dass eine Verschmutzungsemission von einem Zentrum ausgeht bevor die Verdampfung stärker wird und sich ausweitet.

Besonders bevorzugt ist das Auswertemodul ausgebildet, für die Ausbreitung und/oder die geometrische Form der Ausbreitung einen Ausbreitungswinkel zu bestimmen. Der Ausbreitungswinkel ist beispielsweise der Winkel der zwischen zwei Geraden liegt, die von einem Zentrum der Ausbreitung ausgehen und die Ausbreitung im Orts-Zeit-Raum begrenzen. Das Auswertemodul verlangt als Bedingung zur Bewertung einer Helligkeitsänderung und/oder Ausbreitung als Verschmutzungsemission beispielsweise einen Ausbreitungswinkel zwischen 20 und 100 Grad.

Das Auswertemodul ist beispielsweise ausgebildet, als Bedingung für das Bewerten einer Helligkeitsänderung und/oder einer Ausbreitung als Verschmutzungsemission eine positive Ausbreitung zu verlangen, insbesondere eine positive Ausbreitung im Raumrichtung-Zeit-Raum zu verlangen. Eine positive Ausbreitung ist insbesondere eine größer werdende Ausbreitung. Im Speziellen ist das Auswertemodul ausgebildet für die Ausbreitung im Raumrichtung-Zeit-Raum eine sich vergrößernde und/oder ausweidente trichterförmige oder kegelförmige Form zu verlangen. Dieser Ausgestaltung liegt die Überlegung zu Grunde eine besondere Charakteristik von Verschmutzungsemission in Ereignisdaten zu nutzen.

Vorzugsweise ist das Auswertemodul ausgebildet eine Ausbreitungsdauer der Helligkeitsänderung von mindestens 500 Mikrosekunden zu verlangen, um eine detektierte Helligkeitsänderung als Verschmutzungsemission zu bewerten. Als Ausbreitungsdauer wird insbesondere die Dauer der Vergrößerung und/oder Ausweitung der Helligkeitsänderung im Raumrichtung-Zeit-Raum verstanden. Dieser Ausgestaltung liegt die Überlegung zu Grunde eine Fehldetektionsrate für Verschmutzungsemissionen zu reduzieren.

Die Erfindung sieht vor, dass der Dynamic-Vision-Sensor ein pixelliertes Sensorelement aufweist. Das pixelliertes Sensorelement weist eine Mehrzahl an Pixeln auf. Die Pixel sind matrixartig angeordnet. Die Pixel sind jeweils ausgebildet, eine Helligkeitsänderung zu detektieren, insbesondere eine Helligkeitsänderung die einen vorgegebenen und/oder einstellbaren Schwellenwert überschreitet. Im Speziellen sind die Pixel ausgebildet, eine festgestellte Helligkeitsänderung als Signal auszugeben und bei Nichtvorliegen einer Helligkeitsänderung oder einer Helligkeitsänderung kleiner als der Schwellenwert kein Signal auszugeben. Beispielsweise umfassen die Ereignisdaten die ausgegebenen Signale der Pixel, beispielsweise als Signal des Pixels und Pixeladresse. Es ist eine Überlegung der Ausgestaltung, eine Prozessüberwachung mittels des Dynamic-Vision-Sensors durchzuführen, sodass Ereignisse in Form von Veränderungen und/oder Abweichungen im Erfassungsbereich detektiert und ausgegeben werden, jedoch ein Großteil des Erfassungsbereichs nicht als Daten zu übertragen sind, wenn dieser Bereich statisch verbleibt.

Optional ist es vorgesehen, dass der Dynamic-Vision-Sensor ausgebildet ist, Helligkeitsänderungen zu detektieren die auf einer Emission eines Kunststoffes, eines Isolators und/oder eines Hilfsstoffes basieren, der zum Beispiel an einem der Fügepartner im Bereich der Fügestelle liegt.

Optional weist die Überwachungseinrichtung eine Beleuchtungseinheit zur Beleuchtung des mindestens einen Abschnitt der Fügestelle auf. Insbesondere ist die Beleuchtungseinheit koaxial zur Strahlquelle angeordnet, alternativ ist die Beleuchtungseinheit off-axis punktuell oder großflächig angeordnet. Die Beleuchtungseinheit ist beispielsweise eine Beleuchtungsdiode, OLED oder ein Beleuchtungslaser. Insbesondere kann die Beleuchtungseinheit zur Beleuchtung in einem Arbeitswellenlängenbereich ausgebildet sein, wobei der Arbeitswellenlängenbereich beispielsweise Verschmutzungsemissionen zur Emission anregt. Die Beleuchtungseinheit ist insbesondere zur besseren Darstellung und/oder Erfassung von dunklen, kalten und/oder nicht glühenden Verschmutzungsemissionen.

Insbesondere sind die Ereignisdaten frei von statischen Bilddaten und/oder statischen Bildinformationen. Die Ereignisdaten umfassen damit vorzugsweise nur dynamische Bilddaten und/oder Informationsdaten von Veränderungen, insbesondere Helligkeitsänderungen. Die Veränderungen sind insbesondere bezüglich eines Zeitintervalls bestimmt, wobei das Zeitintervall vorzugsweise kleiner ist als 5 µs und im Speziellen kleiner ist als 1 µs. Der Ausgestaltung liegt die Überlegung zugrunde, eine Reduzierung der Datenrate und/oder der Datenmenge zur Aufnahme und/oder Überwachung der Laserstrahlschweißanlage dadurch zu reduzieren, dass die Ereignisdaten nur Informationen über Veränderungen umfassen und keine statischen Informationen als Ballast übertragen werden müssen.

Im Speziellen ist es vorgesehen, dass die Laserstrahlschweißanlage regelbare und/oder einstellbare Fertigungsparameter aufweist. Die Laserstrahlschweißanlage ist beispielsweise durch die Fertigungsparameter parametrierbar, einstellbar und/oder regelbar. Beispielsweise sind Fertigungsparameter Strahlintensität, Ablenkparameter für den energiereichen Strahl und/oder. Das Auswertemodul ist insbesondere ausgebildet, basierend auf den Ereignisdaten und/oder basierend auf festgestellten Ausbreitungen für die Laserstrahlschweißanlage die Fertigungsparameter zum zum Nachregeln zu bestimmen.

Insbesondere weist die Überwachungseinrichtung mindestens zwei Dynamic-Vision-Sensoren auf. Die Dynamic-Vision-Sensoren sind insbesondere so angeordnet, dass ein gemeinsamer Bereich aus unterschiedlichen Ansichten erfasst wird. Insbesondere wird der gemeinsam erfasste Abschnitt von den Dynamic-Vision-Sensoren in zwei nicht koplanaren Ebenen und/oder in Ebenen mit linearunabhängigen Normalenvektoren erfasst. Das Auswertemodul ist dabei ausgebildet, die Ausbreitung in zwei linearunabhängigen Raumrichtungen zu bestimmen. Das Auswertemodul ist im Speziellen ausgebildet, die geometrische Form der Ausbreitung in den mindestens zwei Raumrichtungen und/oder im Raum zu bestimmen. Insbesondere ist das Auswertemodul ausgebildet, eine Helligkeitsänderung als Verschmutzungsemission basierend auf der Ausbreitung in den mindestens zwei Raumrichtungen zu bewerten.

Einen weiteren Gegenstand der Erfindung bildet eine Laserstrahlweißanlage. Die Laserstrahlweißanlage ist insbesondere ausgebildet wir zur Überwachungseinrichtung ausgeführt. Mittels der Laserstrahlweißanlage sind zwei Fügepartner in einem Fügebereich zusammenfügbar, insbesondere zusammenschweißbar. Die Laserstrahlweißanlage weist zur Überwachung und/oder zur Feststellung von Verschmutzungsemissionen einen Dynamic-Vision-Sensor und ein Auswertemodul auf, beispielsweise als Überwachungseinrichtung wie vorher beschreiben. Der Dynamic-Vision-Sensor ist angeordnet, einen Abschnitt des Fügebereichs sensortechnisch zu Erfassung und Helligkeitsänderungen darin zu detektieren und als Ereignisdaten bereitzustellen. Das Auswertemodul ist ausgebildet für eine detektierte Helligkeitsänderung eine Ausbreitung zu bestimmen und basierend auf der Ausbreitung ein Vorliegen einer Verschmutzungsemission zu bewerten und/oder zu entscheiden.

Besonders bevorzugt ist es, dass die Laserstrahlweißanlage eine Lasermaterialbearbeitungseinrichtung zum Aussenden eines Laserstrahls zum Fügebereich aufweist. Vorzugsweise ist der Dynamic-Vision-Sensor koaxial zur Lasermaterialbearbeitungseinrichtung angeordnet. Der Dynamic-Vision-Sensor erfasst den Fügebereich damit insbesondere in der gleichen Stellung wie der Laserstrahl auf den Fügebereich trifft. Alternativ kann der Dynamic-Vision-Sensor off-axis zur Lasermaterialbearbeitungseinrichtung und/oder dem Laserstrahl angeordnet sein.

Einen weiteren Gegenstand der Erfindung bildet ein Verfahren zur Überwachung einer Laserstrahlweißanlage mit einem Dynamic-Vision-Sensor, insbesondere mit der Überwachungseinrichtung wie vorher Beschreiben. Mit dem Dynamic-Vision-Sensor wird ein Abschnitt des Fügebereichs sensortechnisch erfasst und Helligkeitsänderungen werden detektiert. Die Helligkeitsänderungen werden insbesondere auf eine Ausbreitung mit der Zeit untersucht, wobei basierend auf der Ausbreitung auf ein Vorliegen einer Verschmutzungsemission geschlossen wird.

Weitere Vorteile, Wirkungen und Ausgestaltungen ergeben sich aus den beigefügten Figuren und der Beschreibung. Dabei zeigen:

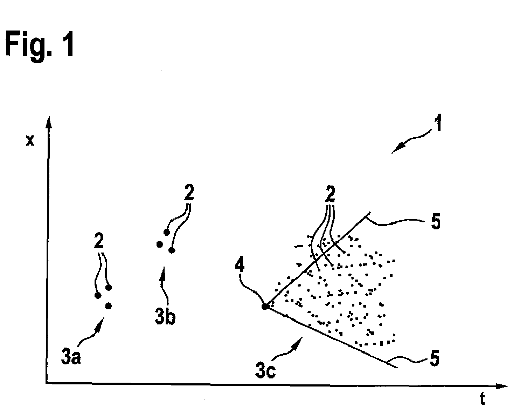

Figur 1 beispielhafte eine Verschmutzungsemission im Raumrichtung-Zeit-Raum;

Figur 1 zeigt schematisch eine Verschmutzungsemission aufgenommen durch einen Dynamic-Vision-Sensor als Darstellung in einem Raumrichtung-Zeit-Raum. Der Dynamic-Vision-Sensor ist in einer Laserstrahlweißanlage angeordnet, einen Fügebereich zu erfassen. Im Fügebereich werden zwei Fügepartner durch Laserstrahlschweißen mit der Laserstrahlweißanlage stoffschlüssig verbunden. Mittels einer Überwachungseinrichtung, welche den Dynamic-Vision-Sensor umfasst, können an den Fügepartnern anhaftende Verschmutzungen festgestellt werden, wenn diese als Verschmutzungsemissionen beim Fügeprozess verdampfen.

Der Dynamic-Vision-Sensor ist ausgebildet, Änderungen zu detektieren und als Ereignisdaten bereitzustellen. Die Änderungen können als Helligkeitsänderungen oder Farbänderungen, die als Helligkeitsänderungen erscheinen, ausgebildet sein. Eine vom Dynamic-Vision-Sensor erfasste Änderung wird als Ereignisdatum ausgegeben und kann als Grundlage für eine Darstellung als Ereignisdatenabbildung dienen. Der Dynamic-Vision-Sensor ist ausgebildet den Fügebereich in zwei Dimensionen x und y zu erfassen und abzubilden.

Ein Auswertemodul ist ausgebildet einen Fügeprozess in einer Raumrichtung-Zeit-Raum-Darstellung 1 darzustellen. Der Raumrichtung-Zeit-Raum wird in Figur 1 durch eine x-Achse und eine Zeitachse t aufgespannt. Ein Bildpunkt 2 zeigt eine detektierte Helligkeitsänderung an der Position x zum Zeitpunkt t an. In der Darstellung können Bildpunkte zu Ereignissen gruppiert werden, beispielweise Ereignis 3a, 3b und 3c. Die Ereignisse 3a und 3b sind zeitlich lokal beschränkt und auch nur kurzeitig präsent. Ein Auswertemodul bewertet die Ereignisse 3a und 3b daher nicht als Verschmutzungsemissionen.

Das Ereignis 3b vergrößerst sich mit der Zeit t von einem Ausgangspunkt, auch Zentrum 4 in positive und negative x-Richtung. Die Helligkeitsänderungen breiten sich mit der Zeit aus, was auch Ausbreitung genannt wird. Für die Ausbreitung ist eine geometrische Form 5 bestimmbar. Die Form 5 ist trichterförmig ausgebildet und weist eine positive Ausbreitung auf. Das Auswertemodul ist beispielsweise ausgebildet Ereignisse und/oder Helligkeitsänderungen mit Ausbreitung in trichterform als Verschmutzungsemission zu bewerten.

## Patentansprüche

1. Überwachungseinrichtung für eine Laserstrahlschweißanlage,
wobei die Laserstrahlschweißanlage zum Fügen von Fügepartnern in einem Fügebereich ausgebildet ist,
mit einem Auswertemodul,
**gekennzeichnet durch**
einen Dynamic-Vision-Sensor,
wobei der Dynamic-Vision-Sensor angeordnet ist, mindestens einen Abschnitt des Fügebereichs sensortechnisch zu erfassen und ausgebildet ist,
lokale Helligkeitsänderungen als Ereignisdaten zu detektieren, wobei der Dynamic-Vision-Sensor ein pixelliertes Sensorelement mit einer Mehrzahl an matrixartig angeordneten Pixeln aufweist, wobei eine lokale Helligkeitsänderung einer Helligkeitsänderung in einem Pixel entspricht,
wobei dem Auswertemodul die Ereignisdaten bereitgestellt sind und das Auswertemodul ausgebildet ist, basierend auf den Ereignisdaten die Helligkeitsänderungen auf eine Ausbreitung in mindestens eine Raumrichtung (x) zu untersuchen, wobei das Auswertemodul ausgebildet ist, eine Verschmutzungsemission basierend auf einer festgestellten Ausbreitung zu detektieren, wobei eine Verschmutzungsemission ein Verdampfen und/oder Sublimieren einer Verschmutzung im Fügebereich und/oder auf den Fügepartner im Fügebereich ist.

2. Überwachungseinrichtung nach Anspruch 1, **dadurch gekennzeichnet, dass** das Auswertemodul ausgebildet ist, für eine festgestellte Ausbreitung eine geometrische Form (5) zu bestimmen und basierend auf der geometrischen Form (5) die Verschmutzungsemission zu detektieren.

3. Überwachungseinrichtung nach Anspruch 2, **dadurch gekennzeichnet, dass** das Auswertemodul ausgebildet ist, als Bedingung für das Bewerten der Ausbreitung als Verschmutzungsemission, eine trichterförmige, kegelförmige und/oder keilförmige geometrische Form (5) zu fordern.

4. Überwachungseinrichtung nach einem der vorherigen Ansprüche, **dadurch gekennzeichnet, dass** das Auswertemodul ausgebildet ist, für die Ausbreitung einen Ausbreitungswinkel zu bestimmen und als Bedingung für das Bewerten einer Ausbreitung als Verschmutzungsemission einen Ausbreitungswinkel von mindestens 20 Grad und/oder höchstens 100 Grad zu fordern.

5. Überwachungseinrichtung nach einem der vorherigen Ansprüche, **dadurch gekennzeichnet, dass** das Auswertemodul ausgebildet ist, als Bedingung für das Vorliegen einer Verschmutzungsemission eine positive Ausbreitung, eine größer werdende trichterförmige, kegelförmige und/oder keilförmige geometrische Form (5) zu verlangen.

6. Überwachungseinrichtung nach einem der vorherigen Ansprüche, **dadurch gekennzeichnet, dass** das Auswertemodul ausgebildet ist, als Bedingung zur Bewertung der Ausbreitung als Verschmutzungsemission eine Ausbreitungsdauer von mindestens 500 Mikrosekunden zu verlangen.

7. Überwachungseinrichtung nach einem der vorherigen Ansprüche, **dadurch gekennzeichnet, dass** das Auswertemodul ausgebildet ist, als Verschmutzungsemission eine Verdampfung, insbesondere eines Kunststoffs, eines Lacks, einer Isolationsschicht und/oder eines Hilfsstoffen zu bestimmen.

8. Überwachungseinrichtung nach einem der vorherigen Ansprüche, **gekennzeichnet durch** mindestens zwei dergleichen Dynamic-Vision-Sensoren zur sensortechnischen Erfassung eines gemeinsamen Abschnitts des Fügebereichs, wobei die Dynamic-Vision-Sensoren angeordnet sind, den gemeinsamen Abschnitt in nicht koplanaren Ebenen zu erfassen, wobei das Auswertemodul ausgebildet ist, die Ausbreitung in mindesten zwei linear unabhängigen Raumrichtungen zu bestimmen.

9. Überwachungseinrichtung nach einem der vorherigen Ansprüche, **dadurch gekennzeichnet, dass** die Laserstrahlschweißanlage regelbare und/oder einstellbare Fertigungsparameter aufweist, wobei das Auswertemodul ausgebildet ist, basierend auf den Ereignisdaten und/oder der Feststellung einer Verschmutzungsemission Regelsignale zur Regelung der Fertigungsparameter zu bestimmen.

10. Laserstrahlschweißanlage zur Fügen mindesten zweier Fügepartner, mit einer Lasermaterialbearbeitungseinrichtung zum Fügen der der Fügepartner in einem Fügebereich mittels Laserstrahlschweißen, **gekennzeichnet durch** eine Überwachungseinrichtung nach einem der vorherigen Ansprüche.

11. Laserstrahlschweißanlage nach Anspruch 10, **dadurch gekennzeichnet, dass** die Lasermaterialbearbeitungseinrichtung ausgebildet ist, einen Laserstrahl zum Laserschweißen auszusenden, wobei der Dynamic-Vision-Sensor koaxial zum ausgesendeten Laserstrahl angeordnet ist.

12. Laserstrahlschweißanlage nach Anspruch 10, **dadurch gekennzeichnet, dass** die Lasermaterialbearbeitungseinrichtung ausgebildet ist, einen Laserstrahl zum Laserschweißen auszusenden, wobei der Dynamic-Vision-Sensor off-axis zum ausgesendeten Laserstrahl angeordnet ist.

13. Verfahren zur Überwachung einer Laserstrahlschweißanlage, insbesondere mit der Überwachungseinrichtung nach einem der Ansprüche 1 bis 9, **dadurch gekennzeichnet, dass** mittels eines Dynamic-Vision-Sensors ein Abschnitt eines Fügebereichs sensortechnisch überwacht wird und lokale Helligkeitsänderungen als Ereignisdaten bereitgestellt werden, wobei der Dynamic-Vision-Sensor ein pixelliertes Sensorelement mit einer Mehrzahl an matrixartig angeordneten Pixeln aufweist, wobei eine lokale Helligkeitsänderung einer Helligkeitsänderung in einem Pixel entspricht, wobei basierend auf der Ereignisdaten eine Verschmutzungsemission im Fügebereich bestimmt und/oder überwacht wird, derart, dass basierend auf den Ereignisdaten die Helligkeitsänderungen auf eine Ausbreitung in mindestens eine Raumrichtung (x) zu untersucht werden, wobei eine Verschmutzungsemission ein Verdampfen und/oder Sublimieren einer Verschmutzung im Fügebereich und/oder auf den Fügepartner im Fügebereich ist.

## Claims

1. Monitoring device for a laser beam welding apparatus,
the laser beam welding apparatus being configured for joining joining partners in a joining region, comprising an evaluation module,
**characterized by**
a dynamic vision sensor,
the dynamic vision sensor being arranged to sense at least one section of the joining region by way of sensor technology and being configured to detect local brightness changes as event data, the dynamic vision sensor having a pixelated sensor element comprising a plurality of pixels arranged like a matrix, a local brightness change corresponding to a brightness change in a pixel,
the event data being provided to the evaluation module and the evaluation module being configured, on the basis of the event data, to examine the brightness changes for a propagation in at least one spatial direction (x), the evaluation module being configured to detect a contaminant emission on the basis of an ascertained propagation, a contaminant emission being evaporation and/or sublimation of a contaminant in the joining region and/or onto the joining partner in the joining region.

2. Monitoring device according to Claim 1, **characterized in that** the evaluation module is configured to determine a geometric shape (5) for an ascertained propagation and to detect the contaminant emission on the basis of the geometric shape (5).

3. Monitoring device according to Claim 2, **characterized in that** the evaluation module is configured to require a funnel-shaped, conical and/or wedge-shaped geometric shape (5) as condition for the assessment of the propagation as contaminant emission.

4. Monitoring device according to any of the preceding claims, **characterized in that** the evaluation module is configured to determine a propagation angle for the propagation and to require a propagation angle of at least 20 degrees and/or at most 100 degrees as condition for the assessment of a propagation as contaminant emission.

5. Monitoring device according to any of the preceding claims, **characterized in that** the evaluation module is configured to demand a positive propagation, an expanding funnel-shaped, conical and/or wedge-shaped geometric shape (5) as condition for the presence of a contaminant emission.

6. Monitoring device according to any of the preceding claims, **characterized in that** the evaluation module is configured to demand a propagation duration of at least 500 microseconds as condition for assessing the propagation as contaminant emission.

7. Monitoring device according to any of the preceding claims, **characterized in that** the evaluation module is configured to determine an evaporation, in particular of a plastic, of a lacquer, of an insulation layer and/or of an auxiliary substance as contaminant emission.

8. Monitoring device according to any of the preceding claims, **characterized by** at least two such dynamic vision sensors for sensing a common section of the joining region by way of sensor technology, the dynamic vision sensors being arranged to sense the common section in non-coplanar planes, the evaluation module being configured to determine the propagation in at least two linearly independent spatial directions.

9. Monitoring device according to any of the preceding claims, **characterized in that** the laser beam welding apparatus has controllable and/or adjustable manufacturing parameters, the evaluation module being configured to determine control signals for controlling the manufacturing parameters on the basis of the event data and/or the ascertainment of a contaminant emission.

10. Laser beam welding apparatus for joining at least two joining partners, comprising a laser material processing device for joining the joining partner in a joining region by means of laser beam welding, **characterized by** a monitoring device according to any of the preceding claims.

11. Laser beam welding apparatus according to Claim 10, **characterized in that** the laser material processing device is configured to emit a laser beam for laser welding, the dynamic vision sensor being arranged coaxially with respect to the emitted laser beam.

12. Laser beam welding apparatus according to Claim 10, **characterized in that** the laser material processing device is configured to emit a laser beam for laser welding, the dynamic vision sensor being arranged off-axis with respect to the emitted laser beam.

13. Method for monitoring a laser beam welding apparatus, in particular with the monitoring device according to any of Claims 1 to 9, **characterized in that**, by means of a dynamic vision sensor, a section of a joining region is monitored by way of sensor technology and local brightness changes are provided as event data, the dynamic vision sensor having a pixelated sensor element comprising a plurality of pixels arranged like a matrix, a local brightness change corresponding to a brightness change in a pixel, a contaminant emission in the joining region being determined and/or monitored on the basis of the event data, in such a way that, on the basis of the event data, the brightness changes are examined for a propagation in at least one spatial direction (x), a contaminant emission being evaporation and/or sublimation of a contaminant in the joining region and/or onto the joining partner in the joining region.

## Revendications

1. Dispositif de surveillance pour une installation de soudage par rayon laser,
l'installation de soudage par rayon laser étant configurée pour assembler des partenaires d'assemblage dans une zone d'assemblage,
comprenant un module d'interprétation,
**caractérisé par**
un capteur de vision dynamique,
le capteur de vision dynamique étant disposé pour acquérir par technique de détection au moins une portion de la zone d'assemblage et configuré pour détecter des changements de luminosité locaux en tant que données d'événement, le capteur de vision dynamique possédant un élément capteur pixellisé comportant une pluralité de pixels disposés à la manière d'une matrice, un changement de luminosité local correspondant à un changement de luminosité local dans un pixel,
les données d'événement étant fournies au module d'interprétation et le module d'interprétation étant configuré pour, en se basant sur les données d'événement, examiner les changements de luminosité en vue d'y déceler une propagation dans au moins une direction spatiale (x), le module d'interprétation étant configuré pour détecter une émission de salissure en se basant sur une propagation constatée, une émission de salissure étant une évaporation et/ou une sublimation d'une salissure dans la zone d'assemblage et/ou sur les partenaires d'assemblage dans la zone d'assemblage.

2. Dispositif de surveillance selon la revendication 1, **caractérisé en ce que** le module d'interprétation est configuré pour déterminer une forme géométrique (5) pour une propagation constatée et pour détecter l'émission de salissure en se basant sur la forme géométrique (5).

3. Dispositif de surveillance selon la revendication 2, **caractérisé en ce que** le module d'interprétation est configuré pour exiger, comme condition pour l'évaluation de la propagation en tant qu'émission de salissure, une forme géométrique (5) en entonnoir, conique et/ou cunéiforme.

4. Dispositif de surveillance selon l'une des revendications précédentes, **caractérisé en ce que** le module d'interprétation est configuré pour déterminer un angle de propagation pour la propagation et pour exiger, comme condition pour l'évaluation de la propagation en tant qu'émission de salissure, un angle de propagation d'au moins 20 degrés et/ou d'au plus 100 degrés.

5. Dispositif de surveillance selon l'une des revendications précédentes, **caractérisé en ce que** le module d'interprétation est configuré pour demander, comme condition pour la présence d'une émission de salissure une propagation positive, une forme géométrique (5) en entonnoir, conique et/ou cunéiforme qui s'agrandit.

6. Dispositif de surveillance selon l'une des revendications précédentes, **caractérisé en ce que** le module d'interprétation est configuré pour demander, comme condition pour l'évaluation de la propagation en tant qu'émission de salissure, une durée de propagation d'au moins 500 microsecondes.

7. Dispositif de surveillance selon l'une des revendications précédentes, **caractérisé en ce que** le module d'interprétation est configuré pour déterminer, en tant qu'émission de salissure, une évaporation, notamment d'une matière plastique, d'un vernis, d'une couche d'isolation et/ou d'une substance auxiliaire.

8. Dispositif de surveillance selon l'une des revendications précédentes, **caractérisé par** au moins deux capteurs de vision dynamique similaire destinés à l'acquisition par une technique de détection d'une portion commune de la zone d'assemblage, les capteurs de vision dynamique étant disposés de manière à acquérir la portion commune dans des plans non coplanaires, le module d'interprétation étant configuré pour déterminer la propagation dans au moins deux directions spatiales linéaires indépendantes.

9. Dispositif de surveillance selon l'une des revendications précédentes, **caractérisé en ce que** l'installation de soudage par rayon laser possède des paramètres de fabrication régulables et/ou réglables, le module d'interprétation étant configuré pour déterminer des signaux de régulation pour la régulation des paramètres de fabrication en se basant sur les données d'événement et/ou la constatation d'une émission de salissure.

10. Installation de soudage par rayon laser destinée à assembler au moins deux partenaires d'assemblage, comprenant un dispositif d'usinage de matériau par laser destiné à assembler les partenaires d'assemblage dans une zone d'assemblage au moyen du soudage par rayon laser, **caractérisée par** un dispositif de surveillance selon l'une des revendications précédentes.

11. Installation de soudage par rayon laser selon la revendication 10, **caractérisée en ce que** le dispositif d'usinage de matériau par laser est configuré pour émettre un rayon laser servant au soudage par laser, le capteur de vision dynamique étant disposé de manière coaxiale par rapport au rayon laser émis.

12. Installation de soudage par rayon laser selon la revendication 10, **caractérisée en ce que** le dispositif d'usinage de matériau par laser est configuré pour émettre un rayon laser servant au soudage par laser, le capteur de vision dynamique étant disposé de manière excentrée par rapport au rayon laser émis.

13. Procédé de surveillance pour une installation de soudage par rayon laser, en particulier comprenant le dispositif de surveillance selon l'une des revendications 1 à 9,
**caractérisé en ce qu'**une portion d'une zone d'assemblage est surveillée par une technique de détection au moyen d'un capteur de vision dynamique et les changements de luminosité locaux sont fournis en tant que données d'événement, le capteur de vision dynamique possédant un élément capteur pixellisé comportant une pluralité de pixels disposés à la manière d'une matrice, un changement de luminosité local correspondant à un changement de luminosité local dans un pixel, une émission de salissure dans la zone d'assemblage étant déterminée et/surveillée en se basant sur les données d'événement, de sorte que les changements de luminosité sont examinés sur la base des données d'événement en vue d'y déceler une propagation dans au moins une direction spatiale (x), une émission de salissure étant une évaporation et/ou une sublimation d'une salissure dans la zone d'assemblage et/ou sur les partenaires d'assemblage dans la zone d'assemblage.
